# EUROPEAN PATENT APPLICATION

(11) **EP 2 418 467 A1**
(43) Date of publication of application: **15.02.2012**
(21) Application number: 11171862.3
(22) Date of filing: 29.06.2011
(51) Int. Cl.: G01J 3/453, G01B 9/02

(54) **Method for producing an interference image, a system for generating an interference image and an interferometer, especially for the fourier spectrometer**

(30) Priority: 21.07.2010 PL 39190110
(71) Applicant: Centrum Badan Kosmicznych Polskiej Akademii Nauk, 00-716 Warszawa (PL)
(72) Inventor: Rataj, Miroslaw, 02-793 Warszawa (PL)
(74) Representative: Balinska, Ewa

(57) **Abstract**

The present invention relates to a method for producing an interference image, wherein the input beam is divided into two beams at path of which beams at least one stationary reflective unit (ZS1,ZS2) is disposed and wherein each of said beams after reflection from said reflective unit is directed onto a movable reflective unit (ZR), at which the optical path difference between said first and said second beams is produced, and then both beams are reversed back and subjected to interference. A double-sided reflective (ZR) unit is used as a movable reflective unit, which is arranged at a route of said beams reflected from the stationary reflective units and onto which both beams are simultaneously directed, and wherein the difference of optical paths between said two beams is produced by means of linear displacement of said movable reflective unit (ZR) in the direction determined by the course of beams from its reflective surfaces so that the displacement of the movable reflective unit equal to x causes the difference in optical paths between said first and second beams equal to 4x. The invention provides also a system for producing an interference image and an interferometer with such system.

## Description

The object of the invention is a method for producing an interference image, a system for generating an interference image and an interferometer, especially for the Fourier spectrometer.

General principle of the Fourier spectrometer has been known since the late nineteenth century and it is based on the principles of the Michelson interferometer.

A Fourier spectometer with typical solution of Michelson interferometer usually comprises a beamsplitter iluminated from a light source, two plan mirrors positioned perpendicularly with respect to each other and a detector, wherein one of said mirrors is a fixed mirror, stationary fixed, and the other one is a movable mirror, mounted in the manner allowing for performing reciprocating linear motion along a line extending perpendicularly to a plane of the movable mirror. A measuring method consists of measuring of a produced interferograme by means of a detector while said movable mirror is being displaced. A light radiation beam exiting the light source, is collimated by means of respective optical system, mostly by means of a beyond- axis mirror system, and afterwards it is directed onto beamsplitter dividing the beam into 50%/50% ratio, and then the beam is directed to interferometer arms equipped with movable mirror and fixed mirror. After being reflected from said mirrors the reflected beams a directed back to the beamsplitter and after passing through it they interfere with each other. As a result two interference beams are created, one of which runs to the detector and the other one runs towards the light source. The detector measures a signal during movement performed by said movable mirror, which signal creates interferograme coming from all waves of the light radiation exiting the light source that are registered by the detector. The next step after recording of an interferogram is to perform of a Fourier transform in order to obtain a spectrum of a measured object.

Other solutions are based on the Sagnaca and Mach-Zender type interferometers, or their modifications.

Commonly known Sagnac-type interferometer comprises also a light source, light beamsplitter unit, most often comprising a beamsplitting plate, two stationary mirrors arranged on opposing sides of said beam-splitting plate at an angle with respect to each other and a detector. Light beam from the light source hits a beamsplitter, passing through which it is divided into two beams that run on the same rout but in opposite directions. Said beams after being reflected from mirrors again unit together on a beamsplitting plate and interfere behind the plate. An interference image thus created in the form of a signal is measured by the detector. A difference between phases of both interfering beams changes while interferometer rotates so that, on the basis of interferogram a rotation of rotating objects can be determined, for example such as vehicles.

The essence of the opto-mechanical solutions of this class devices is the way how changes in the optical path in the mirror system and light beam splitting system are implemented. The principle of operation of this class spectrometers is changing the optical path and measuring the interferogram by a detector during movement of one mirror or both of them.

Those known solutions can be divided into two groups. Solutions of one group are based on a linear reciprocating movement of one or both mirrors. Solutions of the second group are based on systems with a rotating element for changing an optical path or with rotationally movable mirrors (so-called double pendulum).

In the group based on linear motion, there are known solutions using movement of one movable mirror while the second mirror is stationary. In this solution, a linear displacement of the mirror equal to x causes a change of the optical path length equal to 2x.

In spectrometers optical path length determines a spectral resolution. The longer the optical path, the higher the spectral resolution. A long way of mirror movement is associated with an increase in technological and constructional, engineering problems, because smooth movement of the mirror at high speed stability and its constant angular position should be ensured, that is necessary condition for obtaining interference and a high-contrast interference image. Cube corner reflectors are used to ensure the independence from errors in angular position of flat mirrors. In many solutions a backward movement in opposite directions of both mirrors was introduced to reduce the length of displacement of mirrors. A displacement of each mirror for a distance equal to x causes a change of the optical path equal to 4x, which is advantageous for technical solutions of these mechanisms.

From US 6,075,598, for example a solution is known in which one optical element is used to change the optical path simultaneously in both interferometer paths, however it provides only a 2x change of optical path length with respect to the displacement of an optical element equal to x. Also, dimensions of the element serving for operating both interferometer paths cause increased construction requirements in this solution.

The second group of solutions is based on rotational motion. For example, from US 4,654,530 a solution is known with one rotational element utilizing material dispersion and a change of angular position to change the optical path. In further another similar system a pair of parallel mirrors performing the change of optical paths is utilized. In both solutions a beam from light beam splitting element enters these systems, and then it is directed to the mirrors, which turn back said beam again to light beamsplitter or to the system, depending on the type of optical system used.

The above mentioned types of solutions based on the rotational motion change the length of the optical path, but they need additional reflexive mirrors. In other known solutions utilizing rotational motion there are simultaneous rotations of both mirrors utilized, which are known in the literature as "double pendulum". In these systems only limited range of motion can be utilized due to reduction of a beam cross section during rotation of the mirror. Solutions of this type are used for optical systems with not very high spectral resolving power.

The aim of the present invention is to provide a method for producing an interference image and an optical system to produce an interference image that can allow to achieve significant change in the optical path length of the radiation beam while minimizing a displacement of movable parts of an optical system, which simultaneously being free from drawbacks, that are burdened solutions known in the art, such as high degree of structural complexity, especially of the unit for carrying out movements of movable elements, as well as difficulties in ensuring sufficient motion stability, both in terms of its speed, as well as its geometry. The invention is also designed to simplify the solutions known from the prior art relating to manufacturing capabilities.

Method for producing an interference image, in which the input beam is divided into two beams, wherein at paths of said beams at least one stationary reflective unit is arranged, and wherein each said beam after reflection from said reflective unit is directed onto a movable reflective unit, producing an optical path difference between said first and said second beams, then that both said beams are reversed back and subjected to interference, said method according to the invention being characterized in that the double-sided reflective unit is used as a movable reflective unit, which movable reflective unit is arranged between two stationary reflective units at a path of beams reflected from said stationary reflective units, wherein the difference of optical paths between said two beams is produced by means of linear displacement of said movable reflective unit in the direction determined by the course of said beams between reflective surfaces of said movable double-sided reflective unit and stationary reflective units so that, a displacement of said movable reflective unit equal to x causes the difference in optical paths of said first and second beams equal to 4x.

System for producing an interference image having two arms for leading radiation beams, and comprising, a light beam splitting unit arranged at the entrance of an input beam dividing said beam into two beams, at least two stationary reflective units arranged in each arm of the system, for reflecting each of said beams and a movable reflective unit for changing an optical path of said beams, wherein the light beam splitting unit contains a light splitting element and means for adjusting its position, and wherein each of said stationary reflective units contains at least one stationary reflective element and means for adjusting its position, the system according to the present invention being characterized in that said movable reflective unit comprises a double-sided reflective element having two mutually opposing reflecting surfaces and in that it is arranged between two arms of said system in such a way that each of its reflective surfaces directs an incident beam, which is reflected from a stationary reflective unit placed in a suitable arm of the system, back to this unit, and said movable reflective unit is movable linearly in the direction of the course of beams reflected from its both reflective surfaces so that, by the displacement of the movable reflective unit equal to x the difference in optical paths of the first and second beams is equal to 4x.

Preferably, said movable reflective unit is arranged substantially in a middle of the distance between said stationary reflective units.

Preferably, the movable reflective unit is located in vicinity of one of said stationary reflective units.

Preferably, the movable unit is equipped with a driving unit.

Preferably, said driving unit of the movable reflective unit is an ultrasonic motor.

Preferably, said driving unit of the movable reflective unit is a magnetic actuator.

Preferably, said double-sided reflective element is a double sided reflective mirror.

Preferably, the double-sided reflective element is composed of trihedral corner reflectors.

Interferometer, especially for the Fourier spectrometer, comprising a light source, a system for generating an interference image and a detecting system, according to the present invention being characterized in that it comprises said system for generating an interference image according to the present invention as above described.

The solution according to the present invention is therefore based on the introduction of the movable unit equipped with the double-sided reflective element into a track of the system for generating of an interference image, for example into the system which is known from the Sagnaca interferometer. Simultaneously, the movable unit is arranged to be displaced linearly in the direction consistent with the direction of the beams incident upon it from respective corresponding stationary mirror units, so that the movement of the movable unit in the direction towards one stationary mirror unit causes simultaneously moving said movable unit away from the other stationary mirror unit. This structural solution, having a compact configuration and minimal number of constructional components, allows obtaining of the optical path difference equal to 4x while the displacement of the movable element equals to x.

An advantage as effect of the system according to the invention lies in that the linear movement of the movable element between two stationary reflective units along the path of beams reflected from said stationary reflective units consisting in approaching closely one of said units and simultaneously moving away from the other of said units, allows for double reduction in a range of motion of optical components in comparison to traditional known solutions in which the displacement of optical elements equal to x causes the optical path difference equal only to 2x. This helps to reduce construction requirements both with regards to fixing of optical components and with regards to the driving means utilized to move them.

Another advantage of the present invention is to provide possibility of reduction a speed of said movement and to ensure better matching of the preliminary amplifier parameters to meet the needs of the detected signal. This solution enables obtaining a compact construction of the spectrometer by means of minimizing the number of elements and their compact configuration.

The object of the invention is presented in an embodiment in the drawing, in which shows:
Figure 1 shows schematically a system for producing an interference image,
Figure 2 - an interferometer with a system for producing an interference image from Fig. 1 in a schematic top view,
Figure 3 - an interferometer from Fig. 2 in a perspective view,
Figure 4 - an interferometer from Fig. 2 in a perspective view, with the top cover removed, and
Figure 5 - an interferometer from Fig. 2 in a top view, with the top cover removed.

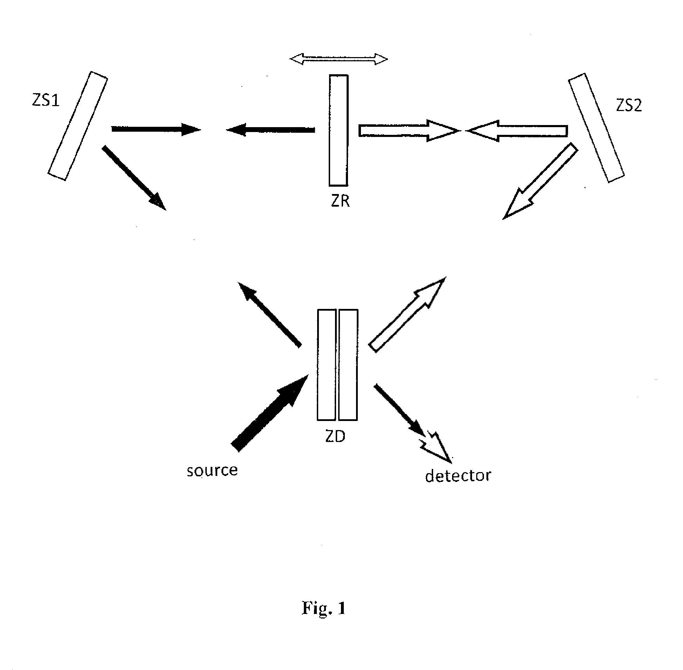

The system for producing an interference image shown in Fig. 1 is based on the Sagnac interferometer diagram. The interferometer of said type comprises essential composing constructional elements, namely: two stationary mirror units ZS2 and ZS1 and a light beam splitting unit ZD for dividing beam between the two arms of the system. The movable reflective unit ZR with a double-sided mirror is arranged in the radiation beam path running between the stationary mirror units. The beam exiting the light radiation source is divided between two arms of the system. Stationary reflective units ZS1 and ZS2 direct the said beams toward the movable reflective unit ZR, after reflection from which they are returned back to the same units. The said beams after passing through the light beam splitting unit ZD interfere with each other, and next they are directed to the detector. A linear displacement of the movable reflective unit ZR towards one of the stationary reflective units ZS1 or ZS2 creates a difference of optical paths length between beams led in both arms of the system respectively. Displacement of the movable reflective unit ZR by the distance x makes the difference between optical paths of the beams equal to 4x.

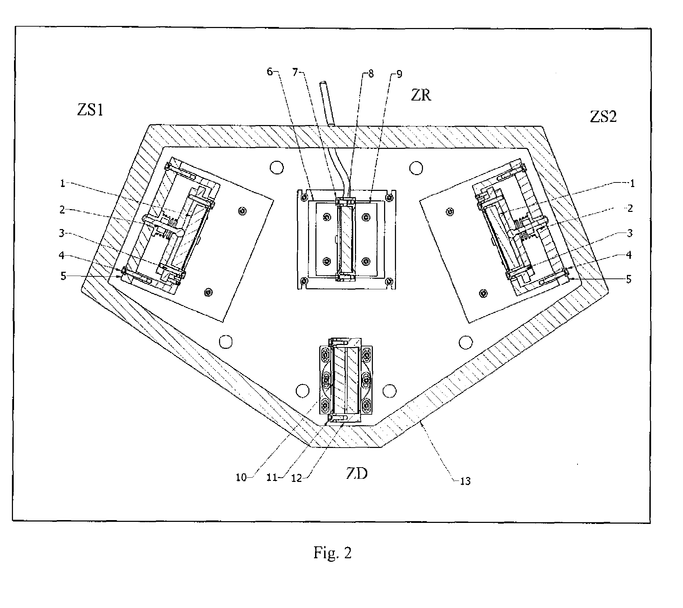

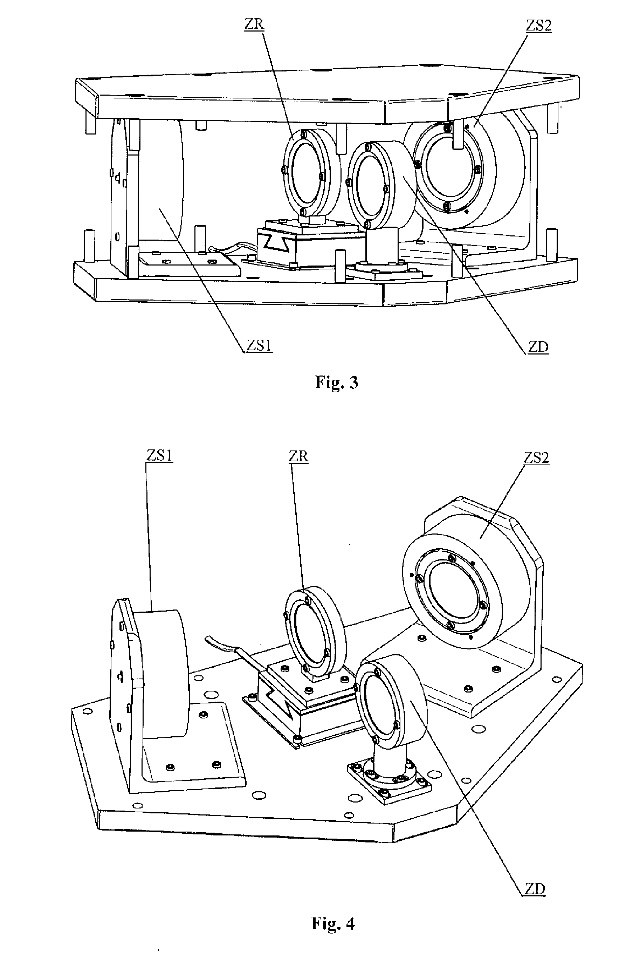

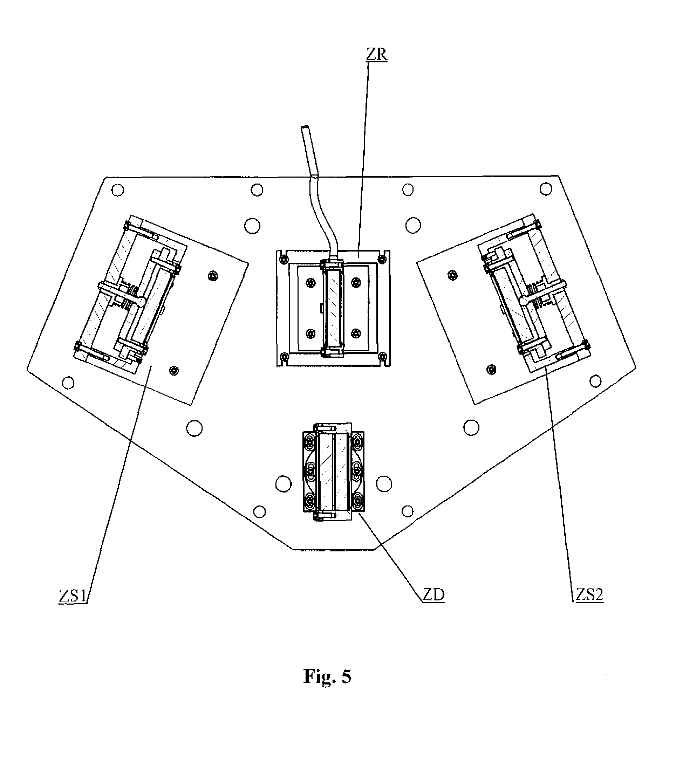

In Figs. 2 to 5 an interferometer is presented for use in Fourier spectrometer comprising a system for producing interference from Fig.1. The interferometer consists of two stationary mirror units ZS1 and ZS2, the table with a light beam splitting unit ZD and an ultrasonic motor 6 on which the movable reflective unit ZR of the double-sided reflective mirror is arranged. Each stationary reflective unit ZS1 and ZS2 consists of a mirror 1, pusher unit 2 for precise adjustment of the mirror, fixing screws 3 and 4 for fastening to the mirror housings and a base 5. Stationary reflective units ZS1 and ZS2 have essentially identical construction and are arranged approximately symmetrically with respect to the light beam dividing plane of the light beam splitting unit ZD. There is also possibility to expand both interferometer arms by development of further additional optical element units in these arms, whose task is to lead the beams along prescribed path.

The movable reflective unit ZR comprises a double-sided mirror 8, placed on the table, and driven by ultrasonic motor 6, which provides fast and accurate linear travelling of the mounting base 9 fastening the mirror to the motor and adjustment screws 7. The light beam splitting unit ZD comprises a light beam dividing plate and a compensator 10, adjustment screws 11 and a fastening plate 12. All the units are fixed on a common basis 13. Any drive mechanism can be utilized for a displacing of the double-sided mirror that mechanism accomplishes reciprocating motion with the required speed stability. A popular solution in interferometric systems is utilizing a magnetic field for displacing a table or tables with a mirror. DC motors can be used for this purpose which perform a linear movement. In place of the movable mirror, it can be used, for example, two corner mirrors having their backs turned towards each other and mounted on the same movable table in order to provide simultaneous reflection from both branches. It is also possible to use two trihedral corner reflectors in a configuration facing each other back to back. The advantage of this solution is a high tolerance to angular maladjustment.

The invention is not limited to the presented embodiment. The number of stationary reflective elements can be increased according to the geometry of the optical paths as is provided for the beams exiting the light beam splitting system. It is also not necessary to arrange the said units symmetrically in relation to the light beam dividing plane, but their configuration can be suitably adjusted to match the prescribed geometry of the optical paths. Any configuration of optical elements in the system according to the invention can be possible, provided that, at least one pair of stationary reflective units is set against each other in such a way, that the radiation beams reflected from them run along the same rout, but in opposite directions.

### List of references

- ZD: light beam splitting unit
- ZS1, ZS2: stationary reflective units
- ZR: movable reflective unit
- 1: mirror ZS1, ZS2
- 2: pusher unit
- 3,: 4 fastening screws
- 5: a base
- 6: ultrasonic motor
- 7: adjustment screws
- 8: double-sided mirror
- 9: basis for fixing 8
- 10: compensator
- 11: adjustment screws
- 12: basis for fixing ZD
- 13: interferometer base

## Claims

1. A method for producing an interference image, in which the input beam is divided into two beams, wherein at routs of said beams at least one stationary reflective unit is arranged and wherein each of said beams after reflection from said reflective unit is directed onto a movable reflective unit producing an optical path difference between said first and said second beam, then both said beams are reversed back and subjected to interference, **characterized in that** the double-sided reflective unit is used as a movable reflective unit, which movable reflective unit is disposed between two stationary reflective units at the rout of beams reflected from said stationary reflective units, and wherein the difference of optical paths between said two beams is produced by means of linear displacement of said movable reflective unit in the direction determined by the course of said beams between reflective surfaces of said movable double-sided reflective unit and stationary reflective units so that, the displacement of said movable reflective unit equal to x causes the difference in optical paths between said first and said second beams equal to 4x.

2. A system for producing an interference image comprising two arms for leading radiation beams, and further comprising a light beams splitting unit, arranged at the entrance, dividing of an input beam into two beams, at least two stationary reflective units, arranged in each arm of the system for reflecting each of said individually beams and a movable reflective unit for changing an optical path of said beams, wherein the said light beam splitting unit contains a light beam splitting element and means for adjusting its position, and wherein each of said stationary reflective units contains at least one stationary reflective element and means for adjusting its position, **characterized in that** said movable reflective unit (ZR) comprises a double-sided reflective element having two mutually opposing reflecting surfaces and it is disposed between two arms of said system in such a way that each of its reflecting surfaces directs an incident beam, which is reflected from respective stationary reflective unit (ZS1, ZS2), arranged in a suitable arm of the said system, back to this unit, and which is movable linearly in the direction of the course of beams reflected from its both reflective surfaces so that, by the displacement of the movable reflective unit (ZR) equal to x the difference in optical paths of said first and said second beams is equal to 4x.

3. The system according to claim 2, **characterized in that** said movable reflective unit (ZR) is disposed approximately in the middle of the distance between said stationary reflective units (ZS1, ZS2).

4. The system according to claim 2, **characterized in that** said movable reflective unit (ZR) is located in vicinity of one of said stationary reflective units (ZS1, ZS2).

5. The system according to claim 2, **characterized in that** the movable reflective unit (ZR) is equipped with a driving unit.

6. The system according to claim 5, **characterized in that** said driving unit for the movable reflective unit (ZR) is an ultrasonic motor (6).

7. The system according to claim 5, **characterized in that** said driving unit for the movable reflective unit (ZR) is a magnetic driving unit.

8. The system according to claim 2, **characterized in that** said double-sided reflective element is a double sided reflective mirror (8).

9. The system according to claim 2, **characterized in that** the double-sided reflective element consists of trihedral corner mirrors.

10. Interferometer, especially for the Fourier spectrometer comprising a light source, a system for generating an interference image and a detecting system, **characterized in that** said system for generating an interference image is the system according to claims 2 to 9.
